# EUROPEAN PATENT APPLICATION

(11) **EP 4 509 403 A1**
(43) Date of publication of application: **19.02.2025**
(21) Application number: 23788220.4
(22) Date of filing: 04.04.2023
(51) Int. Cl.: B64C 27/10, B64C 25/10, B64C 25/24, B64C 39/02, B64D 27/24, B64U 10/16, B64U 30/24, B64U 50/11, B64U 50/23

(54) **FLYING DEVICE**

(30) Priority: 12.04.2022 JP 2022065773
(71) Applicant: KUBOTA CORPORATION, Osaka-shi, Osaka 556-8601 (JP)
(72) Inventor: ISHIKAWA, Mitsuru, Ota-shi, Gunma 379-2304 (JP); YAMAZAKI, Masakazu, Ota-shi, Gunma 379-2304 (JP)
(74) Representative: Müller-Boré & Partner Patentanwälte PartG mbB
(86) International application number: PCT/JP2023/013970
(87) International publication number: WO 2023/199801

(57) **Abstract**

Provided is a flight device in which vibrations and anti-torque generated during flight can be effectively reduced. A flight engine 10 includes an engine 11, a transmission shaft 12, and rotors 14. The engine 11 includes a first engine unit 111 and a second engine unit 112. The transmission shaft 12 includes a first transmission shaft 121, which is rotated by the first engine unit 111, and a second transmission shaft 122, which is rotated by the second engine unit 112. The rotors 14 include a first rotor 141, which is rotated by the first transmission shaft 121, and a second rotor 142, which is rotated by the second transmission shaft 122. The first transmission shaft 121 has a hollow structure, and the second transmission shat 122 is arranged inside the first transmission shaft 121.

## Description

### Technical Field

The present invention relates to a flight device and specifically relates to a flight device in which the rotor is driven by an engine.

### Background Art

Flight devices capable of unmanned flight in the air have been known. Such a flight device is able to fly in the air using the thrust of a rotor rotating about a vertical axis.

Application fields of such flight devices include the field of transportation, the field of surveying, and the field of photography, for example. In the case of applying the flight devices to such fields, surveying equipment and photography equipment are attached to the flight devices. When the flight devices are applied to such fields, the flight devices can fly in areas that human cannot access and perform transportation, photographing, and surveying of such areas. Inventions relating to such flight devices are described in Patent Literature 1 and Patent Literature 2, for example.

In a typical flight device, the aforementioned rotor rotates using electric power supplied from a storage battery mounted on the flight device. However, energy supply by the electric power of the storage battery may not always be sufficient. In order to implement a continuous flight over a long period of time, flight devices equipped with engines also have emerged. In such a flight device, a generator is rotated using driving force of the engine, and the rotor is rotationally driven using electric power generated by the generator. In flight devices having such a configuration, the engine and the generator are connected in series on a path of energy supplied from the power source to the rotor. Such a flight device is therefore called a series-type drone. Use of such flight devices enables photography and surveying of wide areas. A flight device equipped with an engine is described in Patent Literature 3, for example. Furthermore, parallel-type hybrid drones are also gradually emerging, in which the main rotor is mechanically rotated using the driving force of the engine and a sub-rotor is rotated using a motor.

### Citation List

### Patent Literature

Patent Literature 1: Japanese Unexamined Patent Application Publication No. 2012-51545
Patent Literature 2: Japanese Unexamined Patent Application Publication No. 2014-240242
Patent Literature 3: Japanese Unexamined Patent Application Publication No. 2011-251678

### Summary of Invention

### Technical Problem

However, the conventional flight devices described above still have a room for improvement in the driving system mechanism.

Specifically, many drones, as existing flight devices, include plural motors or engines, and because of remaining vibrations or anti-torque due to engines, it is difficult to accurately control the position and orientation of drones in the air. Furthermore, remaining vibrations or anti-torque due to generators also causes a similar problem.

To solve these problems, a gear box or the like may be provided in the drive transmission system. However, such a configuration will increase the complexity of the overall structure of the drone and increase its weight, thus reducing the continuous flight time of the drone.

The counter-torque generated by rotors can be cancelled out by employing coaxial rotors. However, in such cases, the aforementioned problems will become more obvious.

The present invention was made in the light of the aforementioned circumstances, and an object thereof is to provide a flight device in which vibrations and anti-torque generated during flight are effectively reduced.

### Solution to Problem

A flight device of the present invention includes an engine, a transmission shaft, and a rotor, the engine includes a first engine unit and a second engine unit, the transmission shaft includes a first transmission shaft rotated by the first engine unit and a second transmission shaft rotated by the second engine unit, the rotor includes a first rotor rotated by the first transmission shaft and a second rotor rotated by the second transmission shaft, the first transmission shaft has a hollow structure, and the second transmission shaft is arranged inside the first transmission shaft.

In the flight device of the present invention, the first engine unit and the second engine unit are arranged to face each other.

In the flight device of the present invention, the first engine unit includes a first piston, a first crankshaft, and a first connecting rod rotatably connecting the first piston and the first crankshaft, the second engine unit includes a second piston, a second crankshaft, and a second connecting rod rotatably connecting the second piston and the second crankshaft, the first transmission shaft and the first crankshaft are drivingly connected with a first drive transmission unit interposed therebetween, and the second transmission shaft and the second crankshaft are drivingly connected with a second drive transmission unit interposed therebetween.

In the flight device of the present invention, the engine further includes a third engine unit and a fourth engine unit, the first rotor is rotated by the first engine unit and the third engine unit, and the second rotor is rotated by the second engine unit and the fourth engine unit.

In the flight device of the present invention, the first crankshaft and the second crankshaft rotate in opposite directions.

The flight device of the present invention further includes a first generator and a second generator, the first generator is driven by the first engine unit, and the second generator is driven by the second engine unit.

The flight device of the present invention further includes a sub-rotor, wherein
the sub-rotor is rotationally driven by a motor.

### Advantageous Effects of Invention

A flight device of the present invention includes an engine, a transmission shaft, and a rotor, in which the engine includes a first engine unit and a second engine unit, the transmission shaft includes a first transmission shaft rotated by the first engine unit and a second transmission shaft rotated by the second engine unit, the rotor includes a first rotor rotated by the first transmission shaft and a second rotor rotated by the second transmission shaft, the first transmission shaft has a hollow structure, and the second transmission shaft is arranged inside the first transmission shaft. According to the flight device of the present invention, the engine includes the first engine unit and the second engine unit, so that vibrations and torque generated by the engine units cancel each other out. This reduces vibrations and the like generated by the engine during flight, thus stabilizing the position and orientation during flight.

Furthermore, in the flight device of the present invention, the first engine unit and the second engine unit are arranged to face each other. According to the flight device of the present invention, the first engine unit and the second engine unit are arranged to face each other, so that the effect of cancelling vibrations, torque, or the like each other out can be further enhanced.

Still furthermore, in the flight device of the present invention, the first engine unit includes a first piston, a first crankshaft, and a first connecting rod rotatably connecting the first piston and the first crankshaft, the second engine unit includes a second piston, a second crankshaft, and a second connecting rod rotatably connecting the second piston and the second crankshaft, the first transmission shaft and the first crankshaft are drivingly connected with a first drive transmission unit interposed therebetween, and the second transmission shaft and the second crankshaft are drivingly connected with a second drive transmission unit interposed therebetween. According to the flight device of the present invention, the members of the first engine unit and the members of the second engine unit are arranged so as to face each other. This can extremely minimize vibrations and the like generated by running of the first engine unit and the second engine unit.

Still furthermore, in the flight device of the present invention, the engine further includes a third engine unit and a fourth engine unit, the first rotor is rotated by the first engine unit and the third engine unit, and the second rotor is rotated by the second engine unit and the fourth engine unit. According to the flight device of the present invention, use of the third engine unit and the fourth engine unit as a power source in addition to the third engine unit and the fourth engine unit can improve the output of the rotor.

Still furthermore, in the flight device of the present invention, the first crankshaft and the second crankshaft rotate in opposite directions. According to the flight device of the present invention, the rotation direction of the first crankshaft is opposite to that of the second crankshaft, so that the moments generated by rotation of the rotor cancel each other out. This can further improve the stability during flight.

Still furthermore, the flight device of the present invention further includes a first generator and a second generator, in which the first generator is driven by the first engine unit and the second generator is driven by the second engine unit. According to the flight device of the present invention, driving the first generator and the second generator can produce electric energy necessary for flight.

Still furthermore, the flight device of the present invention further includes a sub-rotor, in which the sub-rotor is rotationally driven by a motor. According to the flight device of the present invention, it is therefore possible to more effectively control the position and orientation during flight due to the sub-rotor.

### Brief Description of Drawings

[Fig. 1] Fig. 1 is a plan view of a flight device according to an embodiment of the present invention.
[Fig. 2] Fig. 2 is a cross-sectional view of the flight device according to the embodiment of the present invention.
[Fig. 3] Fig. 3 is a block diagram illustrating the connection configuration of the flight device according to the embodiment of the present invention.
[Fig. 4] Fig. 4 is a cross-sectional view of a part of the flight device according to another embodiment of the present invention.
[Fig. 5] Fig. 5 is a side view of a flight device according to still another embodiment of the present invention.

### Description of Embodiment

Hereinafter, the configuration of a flight device of embodiments will be described with reference to the drawings. In the following description, portions having the same configurations are denoted by the same reference numerals, and the description thereof will not be repeated. The following description will use up, down, front, back, right, and left directions, but these directions are for convenience of explanation. A flight device 10 is also called a drone and specifically also called a parallel-type hybrid drone. The parallel-type hybrid drone is a drone including a rotor mechanically driven by an engine and a rotor driven by a motor.

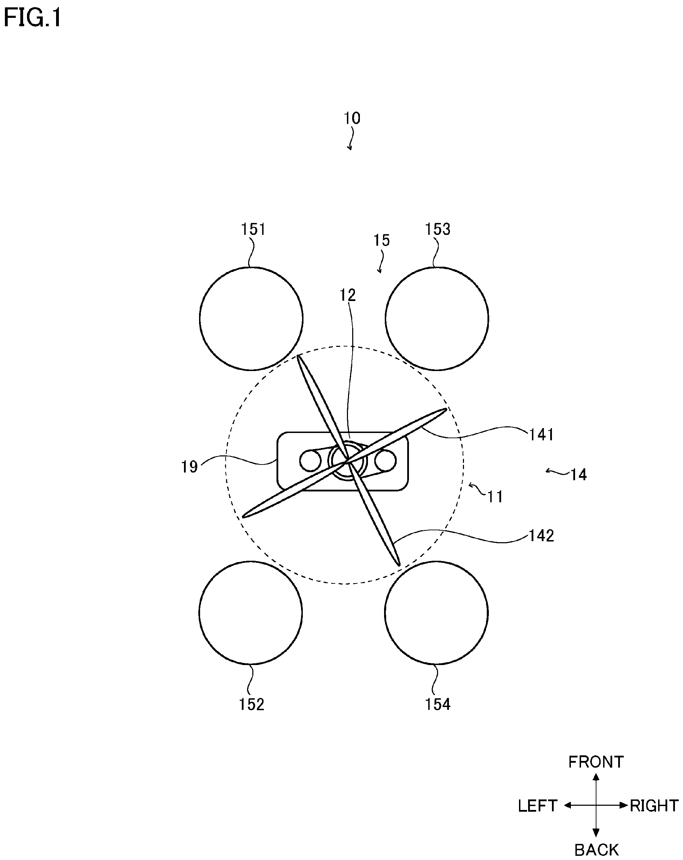

Fig. 1 is a plan view of the flight device 10 as seen from above.

The flight device 10 mainly includes an engine 11, a transmission shaft 12, and rotors 14. The flight device 10 is a parallel-type hybrid drone including two driving systems in parallel, an electric driving system and a mechanical driving system. The electric driving system is a driving system that rotates motors 21 and sub-rotors 15, which will be described later. The mechanical driving system is a driving system that rotates the rotors 14, which will be described later.

The airframe 19 is a body supporting the units constituting the fright device 10 and is made of synthetic resin, metal, or a composite material thereof.

The rotors 14 rotate to generate driving force necessary for the airframe 19 to float. The rotors 14 include a first rotor 141 and a second rotor 142. The first rotor 141 and the second rotor 142 constitute a contra-rotating propeller. The first rotor 141 and the second rotor 142 rotate in opposite directions at the same rotational speed. For example, in top view, the first rotor 141 rotates counterclockwise while the second rotor 142 rotates clockwise. The rotors 14 are main rotors mechanically rotated by driving force of the engine 11.

The flight device 10 includes the sub-rotors 15. The sub-rotors 15 include sub-rotors 151 to 154. The sub-rotors 15 rotate to control the position and orientation of the flight device 10 during flight.

The sub-rotor 151 is positioned at the front left of the airframe 19 and is rotated by a motor 211, which will be described later. The sub-rotor 152 is positioned at the back left of the airframe 19 and is rotated by a motor 212, which will be described later. The sub-rotor 153 is positioned at the front right of the airframe 19 and is rotated by a motor 213, which will be described later. The sub-rotor 154 is positioned at the back right of the airframe 19 and is rotated by a motor 214, which will be described later.

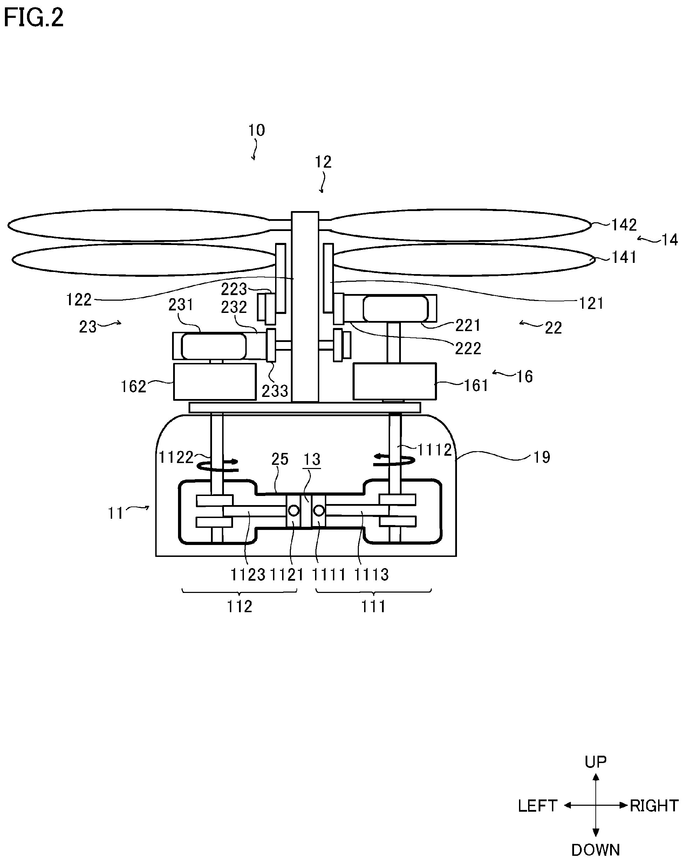

Fig. 2 is a cross-sectional view of the flight device 10.

In the flight device 10, the engine 11 is accommodated within the airframe 19, and the rotors 14 are provided above the airframe 19.

The engine 11 includes a first engine unit 111 and a second engine unit 112.

The first engine unit 111 includes a first piston 1111, a first crankshaft 1112, and a first connecting rod 1113, which rotatably connects the first piston 1111 and the first crankshaft 1112. The first crankshaft 1112 of the first engine unit 111 protrudes upward from the upper surface of the airframe 19.

The second engine unit 112 includes a second piston 1121, a second crankshaft 1122, and a second connecting rod 1123, which rotatably connects the second piston 1121 and the second crankshaft 1122. The second crankshaft 1122 of the second engine unit 112 protrudes upward from the upper surface of the airframe 19.

The first piston 1111 of the first engine unit 111 and the second piston 1121 of the second engine unit 41 share a combustion chamber 13. In other words, the first piston 1111 and the second piston 1121 reciprocate within a single continuing cylinder 25. By the first piston 1111 and the second piston 1121 simultaneously making stroke toward the center, it is possible to achieve a high expansion ratio of gas mixture in the combustion chamber 13 while reducing the stroke amount.

The engine 11 includes a volume space (not illustrated herein) communicating with the combustion chamber 13. In the volume space, a spark plug is arranged. In the combustion chamber 13, an intake port and an exhaust port, which are not illustrated herein, are formed. An air-mixture containing fuel, such as gasoline, is introduced into the combustion chamber 13 through the intake port, and exhaust gas after combustion is discharged from the combustion chamber 13 to the outside through the exhaust port.

The engine 11 configured as described above operates as follows. First, in an intake stroke, the first piston 1111 and the second piston 1121 move outward from the center within the cylinder 25 to introduce air mixture, as a mixture of air and fuel, into the cylinder 25. Next, in a compression stroke, the first piston 1111 and the second piston 1121 are forced toward the center due to inertia of the first and second crankshafts 1112 and 1122 that are rotating, and the air mixture is compressed within the cylinder 25. Then, in a combustion stroke, the not-illustrated spark plug ignites in the combustion chamber 13, and the air mixture burns within the cylinder 25. The first piston 1111 and the second piston 1121 are thereby forced to the respective outer ends, which are bottom dead centers. Then, in an exhaust stroke, the first piston 1111 and the second piston 1121 are forced inward due to inertia of the first and second crankshafts 1112 and 1122 that are rotating. The gas remaining within the cylinder 25 after combustion is discharged to the outside.

In the engine 11, the two first and second pistons 1111 and 1121, which reciprocate within the single cylinder 25, can share strokes. Compared to typical gasoline engines, therefore, the compression ratio of gas mixture can be increased. Since the first piston 1111 and the second piston 1121 face each other within the cylinder 25, the engine 11 does not need a cylinder head that is necessary for general engines. The engine 11 therefore has a simple structure and light weight. The members constituting the engine 11, that is, the first and second pistons 1111 and 1121, the first and second crankshafts 1112 and 1122, or the like are symmetrically positioned opposite to each other and operate in a synchronized manner. Vibrations generated from the members of the engine 11 are thereby canceled each other, so that vibrations generated by the entire engine 11 and transmitted to the outside can be reduced. The torque and the moments generated by rotation of the members constituting the engine 11 is almost all canceled.

By mounting the thus-configured engine 11 on the flight device 10, the flight device 10 can be reduced in size, weight, vibrations, and reduction of counter-torque. Due to the reduction in vibrations in particular, it is possible to prevent delicate equipment, such as arithmetic control devices and GPS sensors, from being adversely affected by orientation control or motor output control. Furthermore, it is possible to prevent parcels being transported by the flight device 10 from being damaged by vibrations.

The engine 11 is provided with a counter-rotation synchronization mechanism not illustrated herein. The counter-rotation synchronization mechanism causes the first crankshaft 1112 and the second crankshaft 1122 to rotate in opposite directions. Furthermore, the counter-rotation synchronization mechanism synchronizes reciprocating motions of the first piston 1111 and the second piston 1121. In the engine 11, therefore, the first crankshaft 1112 and the second crankshaft 1122 rotate in opposite directions in principle. The members drivingly connected to the first crankshaft 1112 and the members drivingly connected to the second crankshaft 1122 therefore rotate in opposite directions without a special reversing mechanism. The first rotor 141 and the second rotor 142, which are illustrated in Fig. 2, therefore rotate in opposite directions at the same rotational speed without any special reversing mechanism. The other members rotationally driven by the first crankshaft 1112 and the second crankshaft 1122 rotate in opposite directions at the same rotational speed without any special reversing mechanism.

The first generator 161 is arranged above the airframe 19 and is rotationally driven by the first crankshaft 1112. Specifically, the first generator 161 includes a not-illustrated rotor, and this rotor is connected to the first crankshaft 1112 so as not to rotate relative to the first crankshaft 1112. With this configuration, the rotor incorporated in the first generator 161 rotates together with the first crankshaft 1112 to implement power generation of the first power generator 161, thus generating electric energy.

The second generator 162 has the same configuration as the first generator 161. Specifically, the second generator 162 is arranged above the airframe 19 and is rotationally driven by the second crankshaft 1122. The second generator 162 includes a not-illustrated rotor, and this rotor is connected to the second crankshaft 1122 so as not to rotate relative to the second crankshaft 1122. With this configuration, the rotor incorporated in the second generator 162 rotates together with the second crankshaft 1122 to implement power generation of the second power generator 162, thus generating electric energy.

The transmission shaft 12 is a substantially shaft-like member that is rotated by the driving force generated by the engine 11 to rotate the aforementioned rotors 14. The transmission shaft 12 includes a first transmission shaft 121, which is rotated by the first engine unit 111, and a second transmission shaft 122, which is rotated by the second engine unit 112. The transmission shaft 12 includes mechanisms mechanically and coaxially rotated in opposite directions as described later.

The upper end of the first transmission shaft 121 is connected to the first rotor 141, and the first rotor 141 is thereby rotated. The first transmission shaft 121 is provided so as to rotate relative to the upper surface of the airframe 19. Lower-end part of the first transmission shaft 121 is drivingly connected to the first crankshaft 1112 with a first drive transmission unit 22 (described later) interposed therebetween. That is, the rotational driving force generated by the first engine unit 111 is transmitted through the first crankshaft 1112 and the first drive transmission unit 22 to the first transmission shaft 121.

The upper end of the second transmission shaft 122 is connected to the second rotor 142, and the second rotor 142 is thereby rotated. The second rotor142 is provided so as to rotate relative to the upper surface of the airframe 19. Lower-end part of the second transmission shaft 122 is drivingly connected to the second crankshaft 1122 with a second drive transmission unit 23 (described later) interposed therebetween. That is, the rotational driving force generated by the second engine unit 112 is transmitted through the second crankshaft 1122 and the second drive transmission unit 23 to the second transmission shaft 122.

The first transmission shaft 121 has a hollow structure, and the second transmission shaft 122 is arranged inside the first transmission shaft 121. Specifically, a substantially cylindrical space is formed inside the first transmission shaft 121, and the second transmission shaft 122 penetrates the space. The upper end of the second transmission shaft 122 is positioned above the upper end of the first transmission shaft 121. Furthermore, the lower end of the second transmission shaft 122 is positioned below the lower end of the first transmission shaft 121. That is, the fist transmission shaft 121 and the second transmission shaft 122 constitute a coaxial contra-rotating structure.

The first drive transmission unit 22 transmits the rotational driving force of the first crankshaft 1112 to the first transmission shaft 121. Specifically, the first drive transmission unit 22 includes a first engine-side pulley 221, a first belt 222, and a first transmission shaft-side pulley 223. The first engine-side pulley 221 is connected to the upper end of the first crankshaft 1112 so as not to rotate relative to the first crankshaft 1112. The first transmission shaft-side pulley 223 is connected to the lower end of the first transmission shaft 121 so as not to rotate relative to the first transmission shaft 121. The first belt 222 is laid over the first engine-side pulley 221 and the first transmission shaft-side pulley 223. With this configuration, at flight of the flight device 10, the first crankshaft 1112 and the first engine-side pulley 221 are rotated by of the first engine unit 111 running. Furthermore, the rotational driving force of the first engine-side pulley 221 is transmitted to the first transmission shaft-side pulley 223 through the first belt 222. The first transmission shaft 121 and the first rotor 141 thereby rotate.

The second drive transmission unit 23 has the same configuration as the first drive transmission unit 22. That is, the second drive transmission unit 23 transmits the rotational driving force of the second crankshaft 1122 to the second transmission shaft 122. Specifically, the second drive transmission unit 23 includes a second engine-side pulley 231, a second belt 232, and a second transmission shaft-side pulley 233. The second engine-side pulley 231 is connected to the upper end of the second crankshaft 1122 so as not to rotate relative to the second crankshaft 1122. The second transmission shaft-side pulley 233 is connected to middle part of the second transmission shaft 122 so as not to rotate relative to the second transmission shaft 122. The second belt 232 is laid over the second engine-side pulley 231 and the second transmission shaft-side pulley 233. With this configuration, at flight of the flight device 10, the second crankshaft 1122 and the second engine-side pulley 231 are rotated by the second engine unit 112 running. Furthermore, the rotational driving force of the second engine-side pulley 231 is transmitted to the second transmission shaft-side pulley 233 through the second belt 232. The second transmission shaft 122 and the second rotor 142 thereby rotate.

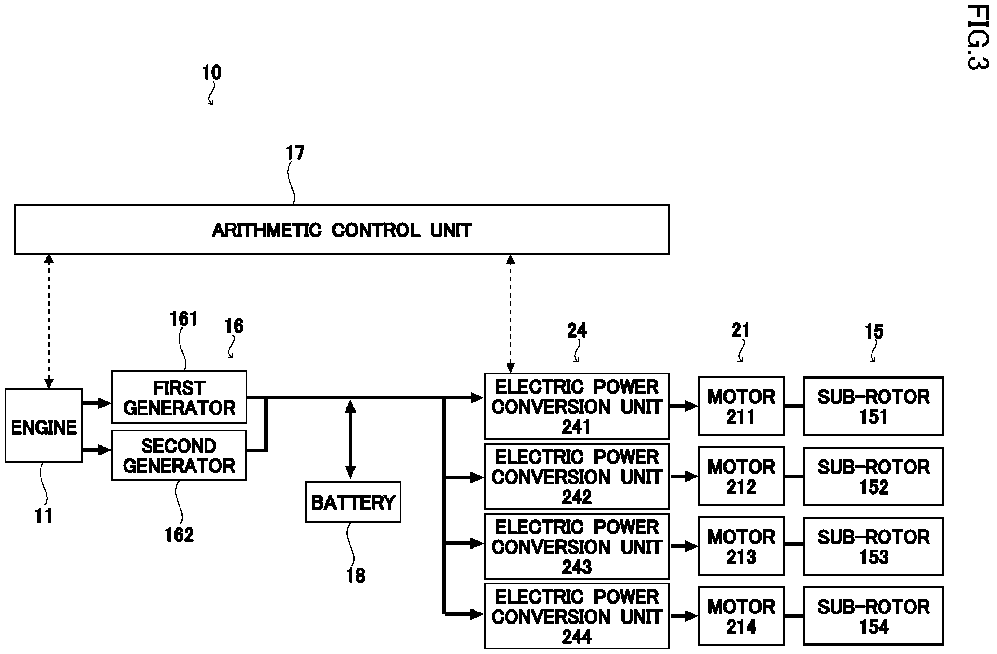

Fig. 3 is a block diagram illustrating the connection configuration of the flight device 10.

The flight device 10 mainly includes the arithmetic control unit 17, the engine 11, generators 16, a battery 18, electric power conversion units 24, the motors 21, and the sub-rotors 15.

The arithmetic control unit 17 includes a CPU, a ROM, a RAM, and the like. The arithmetic control unit 17 controls the behavior of each unit constituting the flight device 10 based on inputs from various sensors and a controller not illustrated herein. The arithmetic control unit 17 serves as a flight controller that controls the rotational speed of the rotors 14 and sub-rotors 15 based on inputs from various sensors.

The engine 11 operates based on input signals from the arithmetic control unit 17 and generates kinetic energy necessary for the flight device 10 to fly.

The generators 16 are units that generate electric power by using a part of the driving force of the engine 11 and include first and second generators 161 and 162. The first generator 161 is driven by the first engine unit 111 of the engine 11, which will be described above. The second generator 162 is driven by the second engine unit 112 of the engine 11.

The battery 18 is interposed between the generators 16 and the electric power conversion units 24. The battery 18 is charged by the generators 16. The electric power discharged from the battery 18 is supplied to the electric power conversion units 24, which will be described later.

The electric power conversion units 24 are provided corresponding to the respective sub-rotors 15. Each power conversion unit 24 can be composed of a converter and an inverter to once convert alternating-current power supplied from the second generator 162 into direct-current power and then convert the direct-current power into alternating-current power with a predetermined frequency. Each electric power conversion unit 24 also can be composed of an inverter to convert direct-current power supplied from the battery 18 into alternating-current power with a predetermined frequency. Specifically, the electric power conversion units 24 include electric power conversion units 241, 242, 243, and 244.

The motors 21 are provided corresponding to the respective sub-rotors 15. The motors 21 include motors 211, 212, 213, and 214. The motors 211, 212, 213, and 214 rotate at a predetermined speed using electric power supplied from the electric power conversion units 241 to 244, respectively.

The sub-rotors 15 include the sub-rotors 151 to 154 as described above. The sub-rotors 151 to 154 are rotated by the motors 211 to 214, respectively.

The flight status of the flight device 10 will be briefly described. The flight device 10 is operated in a landing state, a takeoff state, a hovering state, an ascending-descending state, a horizontal movement state, and an emergency flight state.

In the landing state, the flight device 10 is in contact with the ground. In this state, the engine 11 is not running, and the rotors 14 do not rotate.

In the takeoff state, the flight device 10 is rising away from the contact surface mainly due to the thrust generated by rotation of the rotors 14.

In the hovering state, based on an instruction from the arithmetic control unit 17, the rotors 14 are rotated by driving force generated by the engine 11 to keep the flight device 10 floating at a predetermined position in the air. In this process, the sub-rotors 15 are rotating based on an instruction from the arithmetic control unit 17. The arithmetic control unit 17 controls the electric power conversion units 24 to set the rotational speeds of the motors 21 and sub-rotors 15 to predetermined values so that the flight device 10 can maintain its predetermined altitude and orientation.

In the ascending-descending state, the rotational speed of the engine 11 is controlled to raise or lower the flight device 10. In this process as well, the arithmetic control unit 17 controls the electric power conversion units 24 to set the rotational speeds of the motors 21 and sub-rotors 15 to predetermined values so that the flight device 10 can maintain its predetermined altitude and orientation.

In the horizontal movement state, the arithmetic control unit 17 controls the electric power conversion units 24 to control the rotational speeds of the motors 21 and sub-rotors 15 so that the flight device 10 be tilted. In this process as well, the arithmetic control unit 17 controls the running state of the engine 11 to rotate the rotors 14 at a predetermined speed.

In the emergency flight state, the arithmetic control unit 17 forces the flight device 10 that is flying to land.

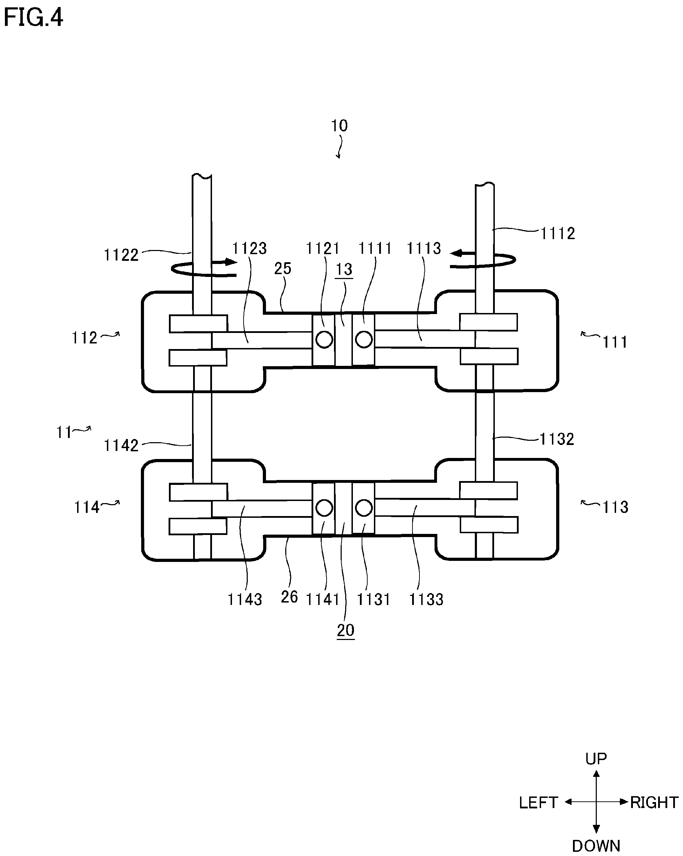

Fig. 4 is a cross-sectional view of a part of the engine 11 of the flight device 10 according to another embodiment. The engine 11 illustrated in Fig. 4 includes a third engine unit 113 and a fourth engine unit 114, in addition to the first engine unit 111 and the second engine unit 112. That is, the engine 11 includes four engine units. The above-described first rotor 141 is rotated by the first engine unit 111 and the third engine unit 113, and the above-described second rotor 142 is rotated by the second engine unit 112 and the fourth engine unit 114. The flight device 10 illustrated in Fig. 4 is the same as that illustrated in Fig. 1 except for the configuration of the engine 11.

The third engine unit 113 and the fourth engine unit 114 face each other along the right-left direction.

The third engine unit 113 includes a third piston 1131, a third crankshaft 1132, and a third connecting rod 1133, which rotatably connects the third piston 1131 and the third crankshaft 1132. Herein, the third crankshaft 1132 of the third engine unit 113 continues to the first crankshaft 1112 of the first engine unit 111 in an integrated manner.

The fourth engine unit 114 includes a fourth piston 1141, a fourth crankshaft 1142, and a fourth connecting rod 1143, which rotatably connects the fourth piston 1141 and the fourth crankshaft 1142. Herein, the fourth crankshaft 1142 of the fourth engine unit 114 continues to the second crankshaft 1122 of the second engine unit 112 in an integrated manner.

The third piston 1131 and the fourth piston 1141 reciprocate within a cylinder 26. The third piston 1131 and the fourth piston 1141 share a combustion chamber 20. With this configuration, in the same manner as described above, it is possible to substantially completely remove the counter torque generated by the third engine unit 113 and the fourth engine unit 114 running. Furthermore, the third engine unit 113 performs the intake, compression, combustion, and exhaust strokes in synchronization with the first engine unit 111. The fourth engine unit 114 performs the intake, compression, combustion, and exhaust strokes in synchronization with the second engine unit 112.

In the flight device 10 illustrated in Fig. 4, the third engine unit 113 and the fourth engine unit 114 are used as a power source in addition to the first engine unit 111 and the second engine unit 112, thus increasing the output of the rotors 14.

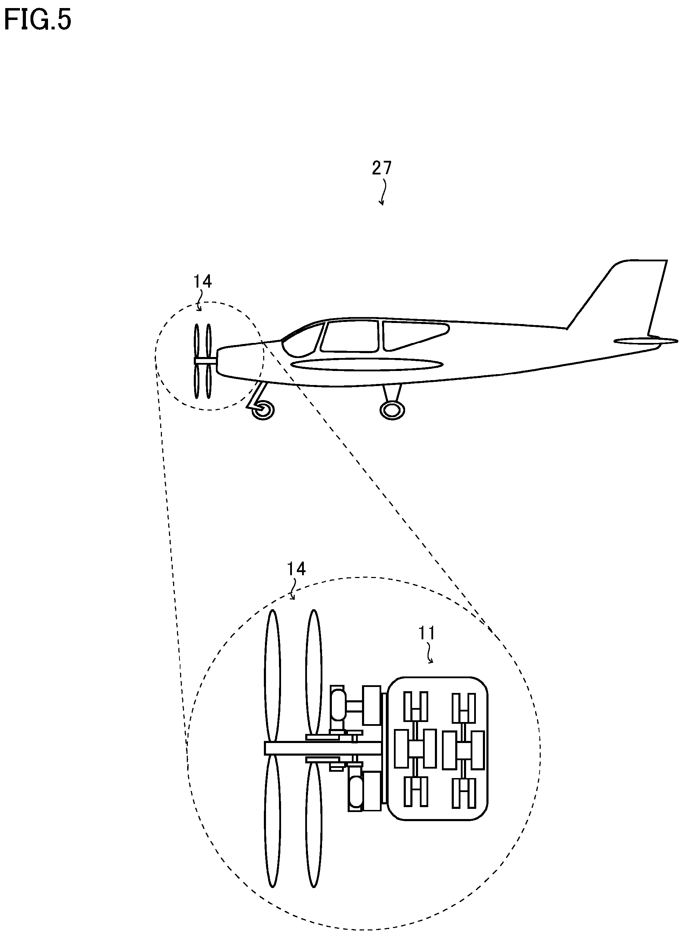

Fig. 5 is a side view of a flight device 27 according to still another embodiment.

The flight device 27 is a fixed-wing propeller aircraft having wings fixed to the fuselage. The flight device 27 includes the rotors 14 at the tip of the airframe. The rotors 14 are rotationally driven by the engine 11 arranged at the front end of the airframe. The configuration of the constituent units that drive the engine 11 and the rotors 14 are the same as that of the flight device 10 described above.

Providing the engine 11 for the flight device 27 reduces vibrations and torque generated by the engine 11 running, thus improving the stable flight and comfortability of the flight device 27.

Hereinabove, the embodiment of the present invention is described. However, the present invention is not limited to the aforementioned embodiment and can be changed without departing from the spirit of the present invention. Furthermore, the aforementioned modes can be properly combined.

In the example illustrated with reference to Fig. 2, the first drive transmission unit 22 and the second drive transmission unit 23 include the belts but can have different drive transmission mechanisms. For example, the first drive transmission unit 22 and the second drive transmission unit 23 can include a gear train or the like.

With reference to Fig. 2, the flight device 10 is a parallel-type hybrid drone but may be an engine-type drone that only includes the rotors 14 but not the sub-rotors 15. In this case, the orientation control of the flight device 10 during flight can be implemented by pitch control of the rotors 14.

### Reference Signs List

- 10: FLIGHT DEVICE
- 11: ENGINE
- 111: FIRST ENGINE UNIT
- 1111: FIRST PISTON
- 1112: FIRST CRANKSHAFT
- 1113: FIRST CONNECTING ROD
- 112: SECOND ENGINE UNIT
- 1121: SECOND PISTON
- 1122: SECOND CRANKSHAFT
- 1123: SECOND CONNECTING ROD
- 113: THIRD ENGINE UNIT
- 1131: THIRD PISTON
- 1132: THIRD CRANKSHAFT
- 1133: THIRD CONNECTING ROD
- 114: FOURTH ENGINE UNIT
- 1141: FOURTH PISTON
- 1142: FOURTH CRANKSHAFT
- 1143: FOURTH CONNECTING ROD
- 12: TRANSMISSION SHAFT
- 121: FIRST TRANSMISSION SHAFT
- 122: SECOND TRANSMISSION SHAFT
- 13: COMBUSTION CHAMBER
- 14: ROTOR
- 141: FIRST ROTOR
- 142: SECOND ROTOR
- 15: SUB-ROTOR
- 151: SUB-ROTOR
- 152: SUB-ROTOR
- 153: SUB-ROTOR
- 154: SUB-ROTOR
- 16: GENERATOR
- 161: FIRST GENERATOR
- 162: SECOND GENERATOR
- 17: ARITHMETIC CONTROL UNIT
- 18: BATTERY
- 19: AIRFRAME
- 20: COMBUSTION CHAMBER
- 21: MOTOR
- 211: MOTOR
- 212: MOTOR
- 213: MOTOR
- 214: MOTOR
- 22: FIRST DRIVE TRANSMISSION UNIT
- 221: FIRST ENGINE-SIDE PULLEY
- 222: FIRST BELT
- 223: FIRST TRANSMISSION SHAFT-SIDE PULLEY
- 23: SECOND DRIVE TRANSMISSION UNIT
- 231: SECOND ENGINE-SIDE PULLEY
- 232: SECOND BELT
- 233: SECOND TRANSMISSION SHAFT-SIDE PULLEY
- 24: POWER CONVERSION UNIT
- 241: POWER CONVERSION UNIT
- 242: POWER CONVERSION UNIT
- 243: POWER CONVERSION UNIT
- 244: POWER CONVERSION UNIT
- 25: CYLINDER
- 26: CYLINDER
- 27: FLIGHT DEVICE

## Claims

1. A flight device comprising an engine, a transmission shaft, and a rotor, wherein
the engine includes a first engine unit and a second engine unit,
the transmission shaft includes a first transmission shaft rotated by the first engine unit and a second transmission shaft rotated by the second engine unit,
the rotor includes a first rotor rotated by the first transmission shaft and a second rotor rotated by the second transmission shaft,
the first transmission shaft has a hollow structure, and
the second transmission shaft is arranged inside the first transmission shaft.

2. The flight device according to claim 1, wherein
the first engine unit and the second engine unit are arranged to face each other.

3. The flight device according to claim 1 or 2, wherein
the first engine unit includes a first piston, a first crankshaft, and a first connecting rod rotatably connecting the first piston and the first crankshaft,
the second engine unit includes a second piston, a second crankshaft, and a second connecting rod rotatably connecting the second piston and the second crankshaft,
the first transmission shaft and the first crankshaft are drivingly connected with a first drive transmission unit interposed therebetween, and
the second transmission shaft and the second crankshaft are drivingly connected with a second drive transmission unit interposed therebetween.

4. The flight device according to claim 1 or 2, wherein
the engine further includes a third engine unit and a fourth engine unit,
the first rotor is rotated by the first engine unit and the third engine unit, and
the second rotor is rotated by the second engine unit and the fourth engine unit.

5. The flight device according to claim 3, wherein the first crankshaft and the second crankshaft rotate in opposite directions.

6. The flight device according to claim 1 or 2, further comprising a first generator and a second generator, wherein
the first generator is driven by the first engine unit, and
the second generator is driven by the second engine unit.

7. The flight device according to claim 1 or 2, further comprising a sub-rotor, wherein
the sub-rotor is rotationally driven by a motor.
